# EUROPEAN PATENT APPLICATION

(11) **EP 3 675 509 A1**
(43) Date of publication of application: **01.07.2020**
(21) Application number: 18306838.6
(22) Date of filing: 24.12.2018
(51) Int. Cl.: H04N 21/431, H04N 5/445, H04N 5/45, H04N 21/45, H04N 21/482

(54) **PREVIEW OF YOUR FAVORITE CHANNELS**

(71) Applicant: InterDigital CE Patent Holdings, 75017 Paris (FR)
(72) Inventor: Anbazhagan, Balaji, 600020 Chennai (IN)
(74) Representative: Amor, Rim

(57) **Abstract**

An apparatus and method are provided for displaying contents. In one embodiment, the method includes receiving a request, while providing a first content, for previewing a plurality of other content on a display. The other content previews are then displayed in a mosaic alongside the first content. The first content being displayed is interrupted when one of the other content previews has been selected.

## Description

### TECHNICAL FIELD

The present embodiments relate generally to providing several content presentations in one environment and in particular to presenting several content previews within one display area for user selection.

### BACKGROUND

This section is intended to introduce the reader to various aspects of art, which may be related to various aspects of the embodiments described and/or claimed below. This discussion is believed to be helpful in providing the reader with background information to facilitate a better understanding of the various aspects. Accordingly, it should be understood that these statements are to be read in this light, and not as admissions of prior art.

Multi-tasking has become a reality of life. Many users of computer and multimedia devices, operate simultaneously between several applications. When multiple displays are available, flipping between different applications to accomplish several tasks is not very challenging. However, when only one display is available or the user is on a mobile device, navigating multiple content views becomes difficult. A similar and related issue comes up when watching a television program. When watching a program content, many viewers end up flipping between channels during breaks and/or commercials because they are unable to have access to multiple programs simultaneously. Some television sets or set top boxes (STBs) provide the capabilities for a picture-in-picture type of arrangement. However, this arrangement only provides a limited multi program access. No system is currently available that presents several simultaneous viewing and interactive options.

There is a concept used in conjunction with programming guides called mosaic. Mosaic refers to providing a thumbnail image or a brief video feed, similar to an icon, to allow viewing of current and upcoming programming. However, this concept should not be mistaken with concurrent viewing of several programs and applications at the same time. Many service providers provide capabilities to users to navigate scheduling information menus, and to select and discover programs by time, title, channel or genre using an input device such as a keypad, computer keyboard or television remote control. Sometimes these may include a collection of elements or channels displayed on a single screen is provided represented by the thumbnail image as discussed. However, these thumbnail images are not appropriate for viewing. In this context, the availability is limited to the intent which is only to use the mosaic for channel selection.

In addition, mosaics that are offered usually only on pre-set channels, and are not even integrated with a programming guide. It is oftentimes hard to locate within a menu system. Consequently, a need exists for providing multiple navigable and interactively selectable content simultaneously, even using a single screen.

### SUMMARY

An apparatus and method are provided for displaying contents. In one embodiment, the method includes receiving a request, while providing a first content, for previewing a plurality of other content on a display. The other content previews are then displayed in a mosaic alongside the first content. The first content being displayed is interrupted when one of the other content previews has been selected.

Additional features and advantages are realized through similar techniques and other embodiments and aspects are described in detail herein and are considered a part of the claims. For a better understanding of advantages and features, refer to the description and to the drawings.

### BRIEF DESCRIPTION OF THE DRAWINGS

The present disclosure will be better understood and illustrated by means of the following embodiment and execution examples, in no way limitative, with reference to the appended figures on which:
Figure 1 schematically represents a block diagram of a system as per one embodiment;
Figure 2 is a block diagram of a screen having multiple window contents forming a mosaic as per one embodiment;
Figure 3 is a block diagram of a screen having multiple window contents forming a mosaic as per another embodiment;
Figure 4 is a block diagram of a screen having multiple window contents forming a mosaic as per an alternate embodiment; and
Figure 5 is a flow chart representation of a methodology according to one embodiment.

Wherever possible, the same reference numerals will be used throughout the figures to refer to the same or like parts.

### DESCRIPTION

It is to be understood that the figures and descriptions have been simplified to illustrate elements that are relevant for a clear understanding, while eliminating, for purposes of clarity, many other elements found in typical digital multimedia content delivery methods and systems. However, because such elements are well known in the art, a detailed discussion of such elements is not provided herein. The disclosure herein is directed to all such variations and modifications known to those skilled in the art.

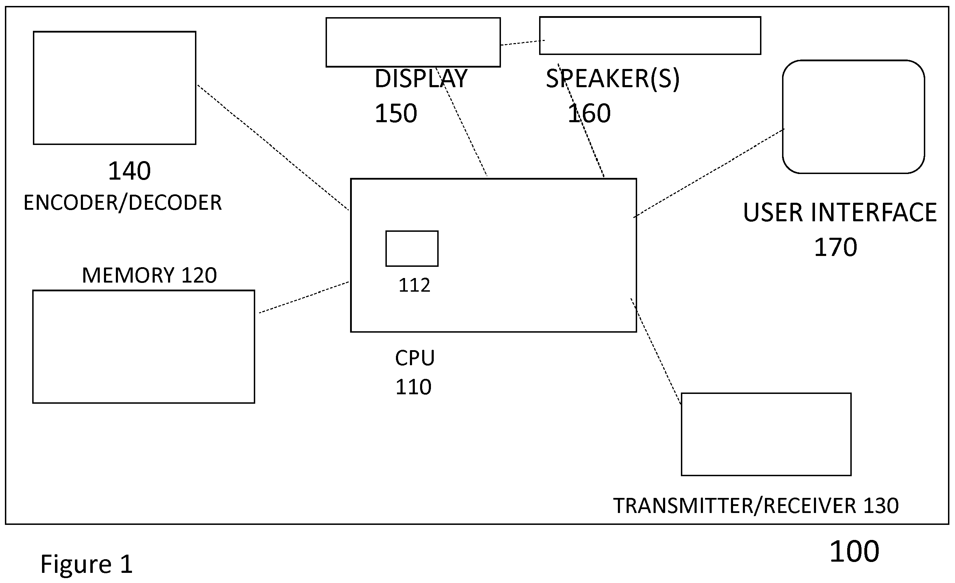

Figure 1 is a block diagram illustrating a system 100 that can receive and display content. This system can be a sophisticated home theater or a mobile tablet or smart phone. In the exemplary embodiment shown, the system 100 can be comprised of a computer system a digital television such as a smart phone, a home theater that may include a set top box (STB) or other such devices and systems as can be appreciated by those skilled in the art. In one embodiment, the system 100 can include a decoder/encoder 140, a display 150 with integrated or alternatively external speakers 160, an transmitter/receiver 130 such as an HDMI type, a CPU 110 having at least a processor 112, a memory 120, and a user interface such as a remote control 170 or other devices. The sound through the speakers 160 may not be needed in view of close captioning capabilities but it can also be used in conjunction in certain embodiments when sound can be appreciated and enhance close captioning or other textual output. The system can alternatively also include a remote control additional light receiver, a tuner, or other devices as can be understood by those skilled in the art. The tuner in turn can receives, tunes, and demodulates a digital broadcast signal in terrestrial digital broadcasting, digital satellite broadcasting, or the like, and outputs a video signal and an audio signal having a selected content. There can also be a demodulator that can decodes a video signal and an audio signal output from the tuner 101, and outputs video data and audio data. The display can display video or broadcast content on a screen and there can be an audio output-or associated with internal or external speakers.

The user interface such as the remote control device 170 can include a sound volume operation button for a sound volume operation. In traditional systems, a remote control often includes a sound volume operation includes sound volume adjustment, mute setting, and mute release. In addition, user interfaces such as a remote control may provide other input and selection capabilities for the user. This can include ability to select channels, or make preference selections as will be later discussed.

The CPU 110 controls the sound volume of the audio output from the speakers and in general controls other operational components. The memory stores status data including data relating to sound volume control associated with current and previous displayed or broadcast content.

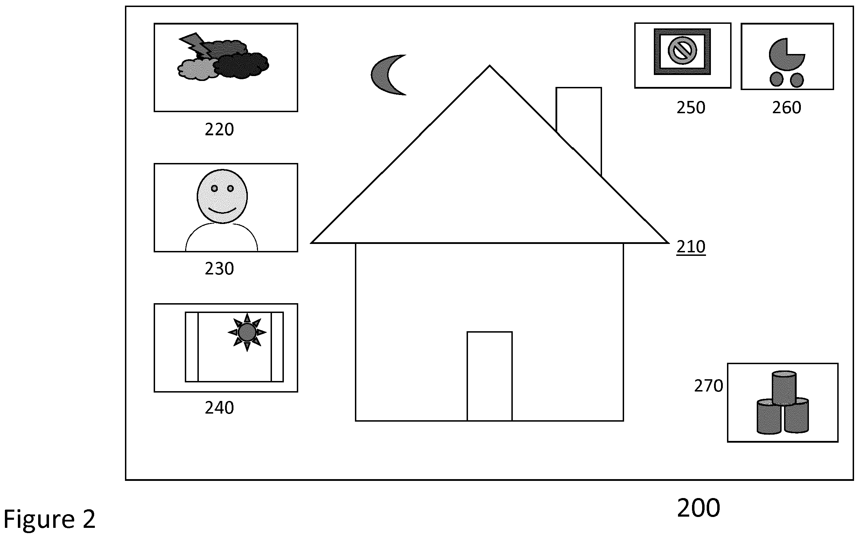

Figure 2 is a block diagram illustration of a display screen 200. The screen can be that of a television set, a computer or a mobile device such as a smart phone or a tablet. In this embodiment, a main content is being viewed at 210 that depicts a house and a moon. In this embodiment, the main content is shown to be proportionally larger than other content being displayed in smaller windows 220 to 270. However, in alternate embodiments this may vary. Windows 220 to 270, each provide different content. These contents may include live broadcasts, video streams of previously recorded content or even photographs and other still images. Each window may appear the same size or be different in size. For example, window 220 may represent a broadcast program of a weather report, window 230 provide a live chat such as one provided on Skype or other meeting applications and window 240 may be showing a movie. In this embodiment windows 210- 230 are designed to be of the same size. However, windows 250-270 are of different sizes from one another and from windows 220-240. Window 270 may be showing a photograph, window 250 may be connected to the Internet and window 260 can be providing a slide show of a presentation.

In one embodiment, the location of windows can be moved by a user while in other embodiments, the location may be previously selected and not be moveable. In the same manner, the size of the windows or the contents may be adjustable in some embodiments and preselected or default oriented in others.

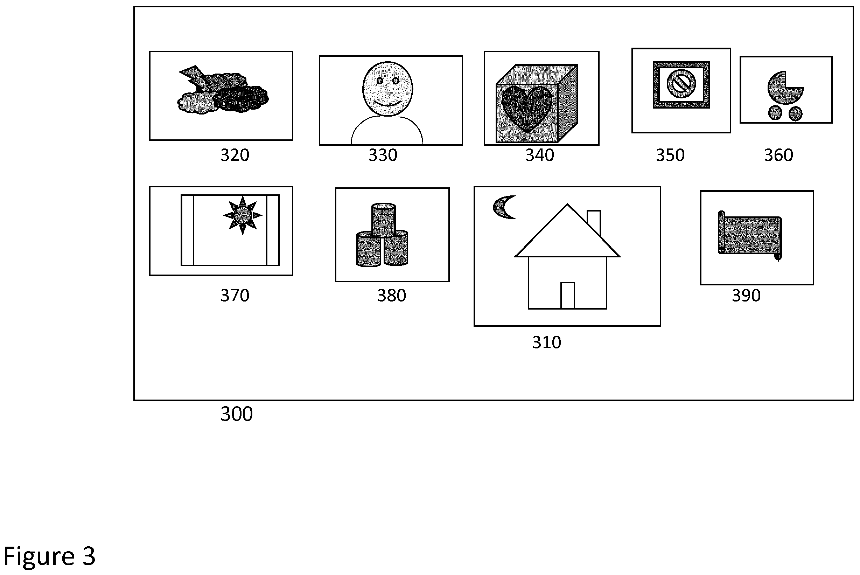

Figure 3 provides an alternative embodiment, where there is no main image as appeared in window 210. Instead, a mosaic of windows appears on the screen 300. As before, these windows may be of the same size of different sizes and display different types of content. These windows can be moveable and arranged by the user, or may be arranged by a particular rule or policy. For example, windows 320-340 may display live broadcasts, while windows 350-380 may display prerecorded content and window 390 may be a photographs or even a scan or a document. In addition, in one embodiment, the arrangement of the windows may be content related. So for example, moving from left to right in a clockwise direction, the first three windows may display content relating to nature while the last three windows relate to contents than have to do with social interaction. The arrangement and management of it can vary and be pre-arranged, default oriented or user selected. In one embodiment, there is an option to rearrange the arrangement and sort and display things multiple times as per user preference. In this particular embodiment, the currently being watched content may appear in the middle (i.e. 310) but this is only one embodiment and this window can be moved to other locations and/or become just a part of the overall greater mosaic.

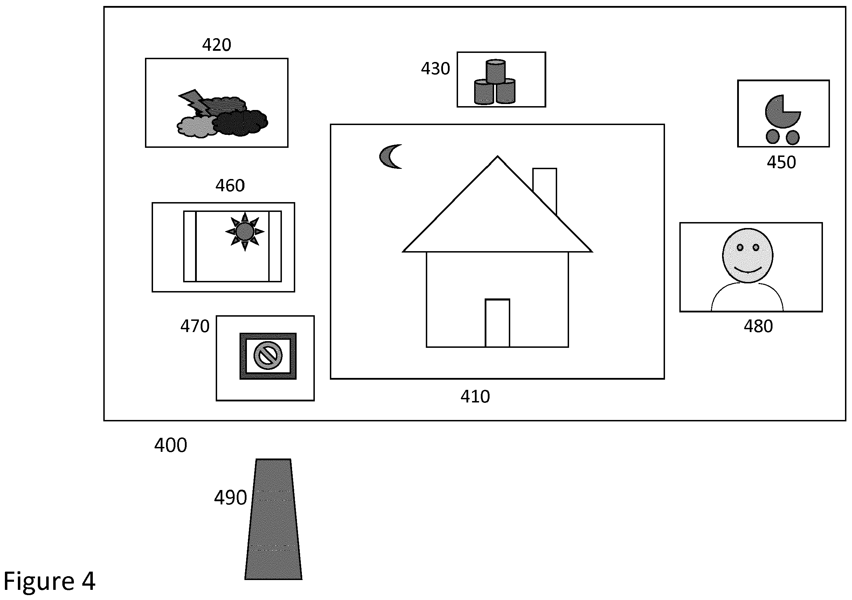

Figure 4, provides a similar embodiment but one that is particularly associated with a television set, either a smart set or one that is connected to a device provided by service providers such as a set top box. One challenge, as discussed earlier is that with multitude of channels available for viewing program in TV especially, but also with multitudes of applications and other content available, when a user is engaged in watching a specific program such as on a television set, there could be other channels streaming more interesting or important programs that the one the user is watching currently. One way of addressing the situation is to preview using the EPG guide, where you might need to scroll through the program list still. Changing channels one by one, even when there is a possibility to have a favorite list or set up, has drawbacks because not only such search still requires some level, if not intense searching, but it leads to losing out part of the program that is currently being watched or broadcast. In one embodiment, as shown in Figure 4, there is a user interface 490 associated with the screen. In this embodiment there is a mosaic of viewing channels. The currently viewed content appears either primarily by itself (similar to Figure 2) or in a central location as depicted in Figure 4. The mosaic of other windows that appear around the central window 410, are windows showing content from a list or previously preferred or amongst a list of favorite channels. These favorite channels may be preselected by the user and be part of a user set up profile or be selected based on other factors. For example, user habits that may or may not get associated with a user profile may become the basis for such preselection. The user habits may even not be associated with a particular user but rather the device itself. In such scenarios, the mosaic of appearing channels or selections may then contain channels based on frequency of previous selection or alternatively based on amount of time spent on each channel (rather than frequency alone). In other words, if the user/device spent watching a particular channel for more than a threshold, during a particular period (i.e. last 30 days etc.), then the channel would appear as part of the mosaic. In another embodiment, the channels may appear due to a particular content. For example, the mosaic contains all channels that provide content related to Alaska based on preselection or user/device viewing habits..

In the embodiment of Figure 4, the currently watched content appears in the center (i.e. 410) and the other favorite channels 420-480 appear as mosaics around the viewing currently being viewed channels. In this embodiment, the availability of other content operates as a preview so that the user can decide if current selection should be altered. In one embodiment, the user interface 490 can provide the setting up of the options and whether or not a mosaic mode of viewing should be entered or exited.

In one embodiment, if there is a set top box (STB) provided, the STB usually has multiple tuners or capability to tune to multiple IP multi cast traffic (in case of IP-TV) or tune to multiple over-the-top media (OTT) contents. Given a list of favorite channels, the STB then can tune to these programs and play the video live in an iconized view by creating a mosaic of channels. In this case, the user interface 490 should now then detect based on the Mosaic tile selected by the user, respective channel is tuned and shown to the user. STBs can also be used in the scenario of Figure 2 or 3, even where all applications are not television based. Similarly, when there is no STB, the processor 112, such as in the case of a mobile device, can be operating like the STB. A similar arrangement as to favorite channels can also be set up, such as with favorite movie providers (i.e. Netflix) or favorite applications (i.e. horror genre video games).

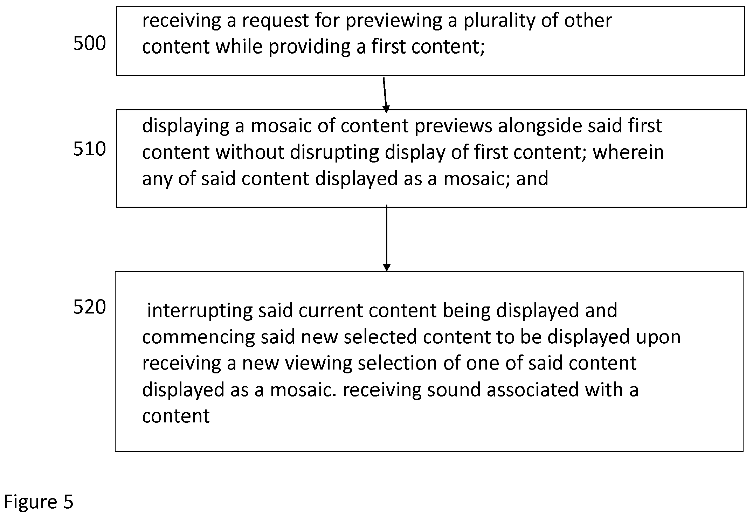

Figure 5 is a flowchart depiction of one embodiment. In step 500, the method includes receiving a request for previewing a plurality of other content while providing a first content. In step 510, a mosaic of other content previews is displayed alongside the first content without disrupting display of the first content. Any of the other content are displayed as a mosaic. Finally, the current content being displayed is then interrupted and a new selected content is displayed upon receiving a new viewing selection of one of the other content displayed as a mosaic.

While some embodiments have been described, it will be understood that those skilled in the art, both now and in the future, may make various improvements and enhancements which fall within the scope of the claims which follow.

## Claims

1. A method comprising:
receiving a request, while providing a first content, for previewing a plurality of other content on a display;
displaying said other content previews in a mosaic alongside said first content; and
interrupting said first content being displayed when one of said other content previews has been selected.

2. An apparatus comprising:
one or more processors configured for
receiving a request, while providing a first content, for previewing a plurality of other content on a display;
displaying said other content previews in a mosaic alongside said first content; and
interrupting said first content being displayed when one of said other content previews has been selected.

3. The method of claim 1 or apparatus of claim 2, wherein said content of said other content preview is provided after interrupting said first content.

4. The method of claim 1 or apparatus of claims 2-3 wherein said other content previews in said mosaic can be selected via a user interface.

5. The method of claim 1 or 4 or apparatus of claims 2-3 wherein said other content previews in said mosaic can be selected from a user profile.

6. The method of claim 5 or apparatus of claim 5, wherein said profile comprises a device profile.

7. The method of claim 5 or apparatus of claim 5 or 6, wherein said profile comprises a user profile.

8. The method of any of the claims 1 or 3-7 and apparatus of any of the claims 2-7, wherein said mosaic is displayed as a plurality of windows, and each window corresponds to a preview of each of said other contents.

9. The method of claim 8 or apparatus of claim 8, wherein said windows in said mosaic are moveable on said display.

10. The method of claim 8 or apparatus of claim 8 wherein said mosaic windows are of different sizes.

11. The method of claim 8 or apparatus of claim 8, wherein said windows of said mosaic are sorted in a plurality of ways according to one or more categories.

12. The method of any of the claims 1 or 3-11 and apparatus of any of the claims 2-11, wherein said mosaic is arranged according to a preselected order.

13. The apparatus of claims 2-10, wherein said apparatus is coupled to a set top box (STB).

14. The apparatus of claim 11, wherein said STB usually has multiple tuners, wherein at least one tuner can be tuned to an IP multi cast traffic channel and at least one tuner can be tuned to an over-the-top media (OTT) content.

15. A non-transitory computer-readable medium storing computer-executable instructions executable to perform the method of any of claims 1 and 3-12.
